# EUROPÄISCHE PATENTSCHRIFT

(11) **EP 4 178 814 B1**
(45) Veröffentlichungstag und Bekanntmachung des Hinweises auf die Patenterteilung: **20.03.2024**
(21) Anmeldenummer: 21737417.2
(22) Anmeldetag: 28.06.2021
(51) Int. Cl.: B60C 27/06, B60C 27/12

(54) **LAUFFLÄCHENSPANNELEMENT FÜR EINE REIFENKETTE UND REIFENKETTE**
TENSIONING ELEMENT OF A TYRE CHAIN LOCATED ON THE TREAD OF SUCH A TIRE AND TYRE CHAIN AS SUCH
ÉLÉMENT DE TENSION D'UNE CHAÎNE DE PNEU SITUÉ SUR LA BANDE DE ROULEMENT D'UN TEL PNEU ET CHAÎNE DE PNEU TELLEMENT

(30) Priorität: 10.07.2020 DE 102020208691
(43) Veröffentlichungstag der Anmeldung: 17.05.2023
(73) Patentinhaber: RUD Ketten Rieger & Dietz GmbH u. Co. KG, 73432 Aalen (DE)
(72) Erfinder: ARRIGONI NERI, Marco, 22046 (CO) Merone (IT); FARINA, Luigi, 23843 (LC) Dolzago (IT)
(74) Vertreter: Grünecker Patent- und Rechtsanwälte PartG mbB
(86) Internationale Anmeldenummer: PCT/EP2021/067663
(87) Internationale Veröffentlichungsnummer: WO 2022/008277

(56) Entgegenhaltungen:
- DE-U1- 8 814 916
- FR-A1- 2 715 892
- US-A- 5 285 834

## Beschreibung

Die Erfindung betrifft ein Laufflächenspannelement für eine an einem Fahrzeugreifen anbringbare Reifenkette. Die Erfindung betrifft zudem eine Reifenkette für einen Fahrzeugreifen, insbesondere eine Schneekette.

Eine Reifenkette weist in der Regel ein Laufnetz auf, welches aus Kettensträngen oder anderen geeigneten Elementen wie Seilen oder Gurten bestehen kann. Ein solches Laufnetz liegt auf der Lauffläche des Fahrzeugreifens auf und gerät beim Abrollen des Fahrzeugreifens in Kontakt mit dem Untergrund. Insbesondere bei Schneeketten dient das Laufnetz zur Verbesserung der Traktion des Fahrzeugreifens. Alternativ oder zusätzlich kann ein Laufnetz auch zum Schutz des Fahrzeugreifens dienen.

Im am Fahrzeugreifen montierten Zustand der Reifenkette, in dem das Laufnetz entlang der Umfangsrichtung des Laufnetzes bzw. des Fahrzeugreifens auf der Lauffläche des Fahrzeugreifens aufliegt, ist ein sicherer und straffer Sitz des Laufnetzes auf der Lauffläche notwendig. Der straffe Sitz ist wichtig um einerseits die Funktion der Reifenkette zu gewährleisten, und um andererseits das Risiko von Beschädigungen am Radkasten des Fahrzeugs durch frei bewegliche Teile der Reifenkette zu vermindern.

Ein sicherer Betrieb einer Reifenkette ist möglich, wenn das Laufflächenspannelement ausgestaltet ist, im am Fahrzeugreifen angebrachten Zustand der Reifenkette auf einer Lauffläche des Fahrzeugreifens aufzuliegen, wobei wenigstens zwei Anschlussorgane zur Anbringung zweier in Umfangsrichtung beabstandeter Enden eines im montierten Zustand der Reifenkette auf der Lauffläche des Fahrzeugreifens aufliegenden Laufnetzes vorhanden sind, und wobei die Anschlussorgane in Umfangsrichtung relativ zueinander unter Erzeugung einer federelastischen Rückstellkraft voneinander weg beweglich miteinander verbunden sind.

Für die genannte Reifenkette ist dieser Vorteil dann erreicht, wenn die Reifenkette ein Laufnetz aufweist, das in einem montierten Zustand auf der Lauffläche des Fahrzeugreifens aufliegt und wenigstens abschnittsweise in Umfangsrichtung des Fahrzeugreifens verläuft, und die Reifenkette mit einem Laufflächenspannelement versehen ist, durch das wenigstens zwei sich in Umfangsrichtung gegenüberliegende Enden des Laufnetzes über eine in Umfangsrichtung federelastische Verbindung miteinander gekoppelt sind.

Durch diese Ausgestaltung ist es möglich, das Laufnetz im montierten Zustand auf der Lauffläche des Fahrzeugreifens zu spannen. Dies hat mehrere Vorteile. Beim Abrollen des Fahrzeugreifens kann das Laufnetz durch eine auftretende Zugkraft ein Stück weit in die Länge gezogen und anschließend durch die Rückstellkraft wieder in die Ursprungslage zurückbewegt werden. Auf diese Weise kann ein insgesamt ruhigeres und leiseres Abrollverhalten der Reifenkette auf dem Fahrzeugreifen erreicht werden. Das erfindungsgemäße Spannelement erfüllt demnach auch die Funktion eines Dämpfungselements. Darüber hinaus erlaubt die federelastische Rückstellkraft auch die Anpassung der Reifenkette an Fahrzeugreifen mit deutlich unterschiedlichen Größen. Die federelastische Rückstellkraft erlaubt es, das Laufnetz auseinander- oder zusammenzuziehen. In dieser Hinsicht erfüllt das erfindungsgemäße Spannelement die Funktion eines Verkürzungselements.

Der straffe Sitz des Laufnetzes dank der federelastischen Rückstellkraft kann einen Reifenverschleiß ausgleichen und auch bei stark abgefahrenen Reifen für einen sicheren Betrieb sorgen. Vorzugsweise ist eine erfindungsgemäße Reifenkette oder eine Reifenkette mit wenigstens einem erfindungsgemäßen Laufflächenspannelement in der Lage, für eine Vielzahl unterschiedlicher Reifengrößen nach ETRTO, ECE, ISO oder einer anderen Norm verwendet zu werden.

Das erfindungsgemäße Laufflächenspannelement kann somit gleichermaßen als Spannelement, als Verkürzungselement und als Dämpfungselement wirken. Eine solche Vorrichtung kann für jeden dieser Einsatzzwecke oder für eine Kombination von mehreren dieser Einsatzzwecke eingesetzt werden.

Die DE 88 14 916 U1, die FR 2 715 892 A1 und die US 5 285 834 A zeigen Lösungen für die Montage von Reifenketten.

Es ist die Aufgabe der Erfindung, ein Laufflächenspannelement und eine Reifenkette mit einem einfach aufgebauten und gleichzeitig stabilen Anschlussorgan bereitzustellen.

Dies ist erfindungsgemäß dadurch erreicht, dass das wenigstens eine Anschlussorgan einen Bügel mit zwei Schenkeln aufweist, wobei die Schenkel im Wesentlichen parallel zur Umfangsrichtung verlaufen, wobei die Schenkel des wenigstens einen Bügels als Führungsabschnitte und ein die Schenkel verbindender Steg als Verbindungsabschnitt ausgestaltet sind.

Die erfindungsgemäße Lösung kann durch verschiedene, jeweils für sich vorteilhafte und beliebig miteinander kombinierbare Ausgestaltungen weiter verbessert werden. Auf diese Ausführungsformen und die mit ihnen verbundenen Vorteile ist im Folgenden eingegangen.

Gemäß einer ersten vorteilhaften Ausgestaltung können die Anschlussorgane im montierten Zustand in Umfangsrichtung zumindest abschnittsweise voneinander beabstandet sein. Insbesondere können Verbindungsabschnitte der Anschlussorgane voneinander beabstandet sein, sodass jeder Verbindungsabschnitt mit einem Ende des Laufnetzes verbindbar ist.

Das Laufflächenspannelement kann eine Traktionsfläche aufweisen, die beim Abrollen eines mit dem Laufflächenspannelement versehenen Fahrzeugreifens mit dem Untergrund in Berührung kommen kann. Die Traktionsfläche kann Traktionselemente wie Stollen, Noppen, Erhebungen oder Vertiefungen aufweisen, um bei montierter Reifenkette die Traktion des Fahrzeugreifens zu verbessern.

Um die Anschlussorgane federelastisch miteinander zu verbinden, bzw. um die Rückstellkraft zu erzeugen, ist bevorzugt wenigstens ein Federelement vorgesehen, über das die wenigstens zwei Anschlussorgane kraftübertragend gekoppelt sind. Dabei können die wenigstens zwei Anschlussorgane mittelbar oder unmittelbar über das Federelement gekoppelt sein.

Alternativ dazu können auch andere Federelemente verwendet werden. Je nach Ausgestaltung des Laufflächenspannelements können diese zur Erzeugung eines Drucks oder eines Zugs ausgestaltet sein um die federelastische Rückstellkraft zu erzeugen. Eine Schraubenfeder kann beispielsweise als Schraubendruckfeder eingesetzt werden. Gemäß einer weiteren vorteilhaften Ausführungsform kann ein Federelement als Zugfeder ausgestaltet sein.

Gemäß einer besonders vorteilhaften Ausgestaltung des Laufflächenspannelements können die Anschlussorgane jeweils einen Verbindungsabschnitt zum Anschließen des Laufnetzes aufweisen, wobei sich die für die unterschiedlichen Enden des Laufnetzes vorgesehenen Verbindungsabschnitte in Umfangsrichtung gegenüberliegen. Die Verbindungsabschnitte können beispielsweise zum Einhängen, Anschweißen oder anderweitigem Verbinden der Enden des Laufnetzes am Laufflächenspannelement dienen.

Das Laufnetz ist vorzugsweise aus Kettensträngen aufgebaut. Folglich können die Verbindungsabschnitte geeignete Mittel zur Verbindung und zum Halten von Kettengliedern der Kettenstränge aufweisen.

Bevorzugt weist wenigstens eines der Anschlussorgane wenigstens einen relativ zum wenigstens einen anderen Anschlussorgan verschieblich ausgestalteten Führungsabschnitt auf. Dieser kann insbesondere zur translatorischen, hierbei bevorzugt parallel zur Umfangsrichtung translatorischen Führung dienen. Dadurch können die Anschlussorgane relativ zueinander in Umfangsrichtung beweglich geführt sein.

Zur Beweglichkeit in Umfangsrichtung ist zu erwähnen, dass, obwohl die Umfangsrichtung in Bezug auf das gesamte Laufnetz oder den Fahrzeugreifen kreisförmig ist, diese in Bezug auf das Laufflächenspannelement, welches in der Regel lediglich nur einen Teil der Lauffläche eines Fahrzeugreifens bedeckt, als annähernd geradlinig betrachtet werden kann. Insbesondere umfasst die Umfangsrichtung in Bezug auf ein Laufflächenspannelement auch die Tangente zur Umfangsrichtung.

Der wenigstens eine Führungsabschnitt kann sich vom Verbindungsabschnitt weg erstrecken. Bevorzugt sind der Verbindungsabschnitt und der wenigstens eine Führungsabschnitt eines Anschlussorgans einstückig miteinander gebildet. Besonders bevorzugt ist der wenigstens eine Führungsabschnitt wenigstens eines Anschlussorgans mit dem wenigstens einen Federelement kraftübertragend verbunden.

Das wenigstens eine Federelement ist bevorzugt eine Schraubendruckfeder, insbesondere eine zylindrische Schraubendruckfeder, und zumindest abschnittsweise schraubenförmig um den Führungsabschnitt herum verlaufend angeordnet. Hierdurch kann ein kompakter Aufbau und eine wirksame Kraftübertragung der von der Schraubendruckfeder erzeugten Federkraft auf das Anschlussorgan erreicht werden. Alternativ zur Schraubendruckfeder kann das wenigstens eine Federelement auch wenigstens eine Blattfeder, eine Tellerfeder, eine Zugfeder oder ein anderes geeignetes Federelement aufweisen. Insbesondere kann es auch möglich sein, ein Federelement aus einem elastischen Kunststoff, beispielsweise einem Elastomer oder einem Gummiwerkstoff zu fertigen.

Insbesondere im Fall eines als Schraubendruckfeder ausgestalteten Federelements sind der Führungsabschnitt und die Schraubendruckfeder bevorzugt koaxial zueinander angeordnet. Dabei durchdringt der Führungsabschnitt des Anschlussorgans die Schraubendruckfeder bevorzugt vollständig.

Ein freies Ende des Führungsabschnitts, insbesondere ein dem Verbindungsabschnitt des Anschlussorgans gegenüberliegendes freies Ende, ist bevorzugt mit einem Ende des Federelements gekoppelt. Ein zweites Ende des Federelements liegt bevorzugt an einem feststehenden Teil des Laufflächenspannelements an. Das feststehende Teil kann ein Teil sein, welches sich nicht mit dem zum Führungsabschnitt gehörenden Anschlussorgan mitbewegt. Das feststehende Teil kann beispielsweise das wenigstens eine andere Anschlussorgan, ein Grundkörper oder ein Gehäuse des Laufflächenspannelements sein.

Um die Kraftübertragung zwischen dem Federelement und dem Führungsabschnitt zu verbessern, kann der Führungsabschnitt eine Querschnittsvergrößerung im Bereich des freien Endes aufweisen. Der Querschnitt kann hierbei größer sein als ein Durchmesser der Schraubendruckfeder, sodass diese an der Querschnittsvergrößerung anstoßen kann.

Die Querschnittsvergrößerung kann auch vorhanden sein, wenn keine Schraubendruckfeder vorgesehen ist. In diesem Fall hält die Querschnittsvergrößerung das Anschlussorgan unverlierbar am Grundkörper.

Die Querschnittsvergrößerung am freien Ende des Führungsabschnitts kann durch eine Schraubenmutter realisiert sein, die auf ein im Führungsabschnitt geformtes Außengewinde geschraubt ist. Alternativ dazu kann auch ein Stift, ein Flansch oder ein anderes geeignetes Element zur Querschnittvergrößerung dienen. Insbesondere kann eine Hülse auf ein freies Ende des Führungsabschnitts gepresst werden, um die Querschnittsvergrößerung zu erzeugen. Vorzugsweise kann der Führungsabschnitt hierzu im Bereich des Endes mit einer umlaufenden Nut versehen sein, um eine formschlüssige Verbindung mit der Hülse zu ermöglichen.

Um die Querschnittsvergrößerung einfach zu erzeugen, kann diese auch durch Umformen des Führungsabschnitts, insbesondere an dessen freiem Ende, hergestellt werden. Dadurch kann der Querschnitt zumindest in einer Richtung vergrößert werden. Auf dieser Weise kann beispielsweise ein Flansch ausgeformt werden.

Alternativ dazu ist es auch möglich, den Führungsabschnitt flachzudrücken, also in einer Richtung quer zu einer Längsachse des Führungsabschnitts zu pressen, wodurch ein verbreiterter Abschnitt, insbesondere am freien Ende, entsteht. Um trotzdem eine um den Führungsabschnitt herum laufende Querschnittsvergrößerung zu erhalten, kann eine Ringscheibe auf dem Führungsabschnitt angeordnet sein, welche durch das umgeformte Ende des Führungsabschnitts auf diesem gehalten ist. Bei der Herstellung einer solchen Ausgestaltung wird bevorzugt zunächst die Ringscheibe auf den Führungsabschnitt gesetzt und das freie Ende anschließend zum Halten der Ringscheibe umgeformt.

Um ein einfach aufgebautes und gleichzeitig stabiles Anschlussorgan zu erhalten, weist das wenigstens eine Anschlussorgan einen Bügel mit zwei Schenkeln auf, wobei die Schenkel im Wesentlichen parallel zur Umfangsrichtung verlaufen. Der Bügel ist bevorzugt aus Rundstahl gefertigt.

Ferner sind die Schenkel des wenigstens einen Bügels als Führungsabschnitte und ein die Schenkel verbindender Steg als Verbindungsabschnitt ausgestaltet.

Um ein stabiles und kompaktes Laufflächenspannelement zu erhalten, sind die Anschlussorgane bevorzugt in einem zur Auflage auf der Reifenlauffläche ausgestalteten Grundkörper unverlierbar gehalten. Der Grundkörper kann ferner mit Traktionselementen wie Stollen, Rippen, Vertiefungen, Stacheln oder anderen Elementen versehen sein, um die Traktion eines mit dem Laufflächenspannelement versehenen Fahrzeugreifens zu verbessern.

Um Gewicht zu sparen und um die Herstellungskosten niedrig zu halten, kann der wenigstens eine Grundkörper aus einem Kunststoff gefertigt sein. Alternativ dazu kann der Grundkörper auch aus einem Metall gefertigt sein.

Der wenigstens eine Führungsabschnitt wenigstens eines der Anschlussorgane kann den Grundkörper an wenigstens einer Stelle zumindest abschnittsweise durchdringen. Hierdurch kann das Anschlussorgan sicher am Grundkörper gehalten sein. Bevorzugt durchdringt der Führungsabschnitt den Grundkörper an einer zwischen dem Verbindungsabschnitt und dem Federelement liegenden Stelle. Der Grundkörper kann eine Durchführung, insbesondere in Form einer Bohrung für den Führungsabschnitt des Anschlussorgans aufweisen.

Der wenigstens eine Führungsabschnitt wenigstens eines Anschlussorgans ist bevorzugt verschieblich in dem Grundkörper gehalten, besonders bevorzugt federelastisch verschieblich gehalten.

Gemäß einer weiteren vorteilhaften Ausführungsform des Laufflächenspannelements weisen die wenigstens zwei Anschlussorgane jeweils einen am Grundkörper gehaltenen Bügel auf, von denen einer in Bezug auf den Grundkörper verschieblich und der andere unverschieblich gehalten ist. Alternativ dazu können auch beide Anschlussorgane, bzw. deren Bügel verschieblich am Grundkörper gehalten sein.

Um einen kompakten Aufbau zu erhalten und um zumindest das wenigstens eine Federelement zu schützen, kann der Grundkörper wenigstens eine sich entlang der Umfangsrichtung erstreckende Bohrung aufweisen, in der sowohl der wenigstens eine Führungsabschnitt als auch das wenigstens eine Federelement, sofern vorhanden, aufgenommen sind. Die Bohrung kann mit der Stelle, an der der Führungsabschnitt den Grundkörper durchdringt, identisch sein.

Der Grundkörper kann eine Unterseite zur Auflage auf der Reifenlauffläche aufweisen. Diese Unterseite liegt bevorzugt einer Oberseite des Grundkörpers gegenüber, die mit einer weiter oben beschriebenen Traktionsfläche versehen ist. Diese Traktionsfläche kann beispielsweise Traktionselemente aufweisen.

Der Grundkörper kann wenigstens einen radial wegragenden Ausleger zur Verbindung mit einer Befestigungsvorrichtung aufweisen. Die Befestigungsvorrichtung kann zur Befestigung der Reifenkette an einer Felge, einer Radbefestigungsschraube, oder einem anderen Teil des Fahrzeugreifens dienen. Bevorzugt ist der Ausleger einstückig mit dem Grundkörper ausgestaltet.

Die erfindungsgemäße Reifenkette lässt sich dadurch weiter verbessern, dass diese mit wenigstens einem erfindungsgemäßen Laufflächenspannelement versehen ist.

Das wenigstens eine Laufflächenspannelement kann wenigstens drei quer zur Umfangsrichtung voneinander beabstandete Verbindungsstellen für Kettenglieder jeweils eines Endes des Laufnetzes aufweisen, wobei wenigstens zwei der Verbindungsstellen gleich oder unterschiedlich weit vom gegenüberliegenden Ende des Laufnetzes entfernt sein können. Hierdurch können unterschiedliche Konfigurationen für die Länge des Laufnetzes realisiert werden.

Gemäß einer weiteren Ausführungsform kann das Laufflächenspannelement an zumindest einer Seite, bzw. an zumindest einem der Anschlussorgane wenigstens drei quer zur Umfangsrichtung voneinander beabstandete Verbindungsstellen aufweisen. Bevorzugt sind mindestens zwei Verbindungsstellen in Umfangsrichtung unterschiedlich weit von dem gegenüberliegenden Ende des Laufnetzes entfernt. Wenigstens zwei Verbindungsstellen können in Umfangsrichtung auf unterschiedlicher Höhe liegen.

Selbst wenn die wenigstens drei Verbindungsstellen auf einer Höhe entlang der Umfangsrichtung liegen, also gleich weit vom gegenüberliegenden Ende des Laufnetzes entfernt sind, können diese Verbindungsstellen zum Verkürzen der Reifenkette genutzt werden. Dies wird dadurch erreicht, dass die Kettenstränge je nachdem, in welcher Verbindungsstelle sie eingehängt sind, in einem unterschiedlichen Winkel zur Umfangsrichtung verlaufen. Je steiler die Kettenstränge zur Umfangsrichtung verlaufen, desto stärker fällt die Verkürzung der Kettenstränge aus.

An einer Verbindungsstelle kann ein Kettenstrang, insbesondere ein Endglied eines Kettenstranges, eingehängt oder anderweitig mit dem jeweiligen Anschlussorgan verbunden sein. Darüber hinaus können auch mehrere Kettenstränge, insbesondere deren Endglieder, an einer Verbindungsstelle mit dem Anschlussorgan verbunden sein.

Das erfindungsgemäße Laufflächenspannelement kann für jedwede Art von Reifenketten verwendet werden. So kann es für Reifenketten aus Rundstahlketten, Seilen, Gurten odertextilem Gewebe verwendet werden. Auch ist die Anbindung an eine Befestigungsvorrichtung nicht zwingend. Das Laufflächenspannelement kann auch nur über die Enden des Laufnetzes mit der Reifenkette verbunden sein. Es ist auch möglich, dass Laufflächenspannelement oder dessen Grundkörper, sofern vorhanden, mit weiteren Kettensträngen verbunden ist.

Im Folgenden ist die Erfindung beispielhaft anhand vorteilhafter Ausführungsformen mit Bezug auf die Zeichnungen näher erläutert. Die bei den Ausführungsformen beispielhaft dargestellten Merkmalskombinationen können nach Maßgabe der obigen Ausführungen entsprechend den für einen bestimmten Anwendungsfall notwendigen Eigenschaften durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt. In den Zeichnungen werden für Elemente gleicher Funktion und/oder gleichen Aufbaus stets dieselben Bezugszeichen verwendet.

Es zeigen:
- Fig. 1: ein erfindungsgemäßes Laufflächenspannelement in einer Aufsicht mit einem Teil eines Laufnetzes;
- Fig. 2: das Laufflächenspannelement aus Fig. 1 in einem Zustand, in dem eines der Anschlussorgane ausgelenkt ist;
- Fig. 3: eine Explosionszeichnung des Laufflächenspannelements der Fig. 1;
- Fig. 4: eine schematische Darstellung einer an einem Fahrzeugreifen montierten Reifenkette;
- Fig. 5: eine schematische perspektivische Darstellung einer weiteren Ausführungsform eines Anschlussorgans in einem offenen Zustand;
- Fig. 6: das Anschlussorgan der Fig. 5 in einem geschlossenen Zustand;
- Fig. 7: eine schematische perspektivische Darstellung einer weiteren Ausführungsform eines Anschlussorgans in einem offenen Zustand;
- Fig. 8: das Anschlussorgan der Fig. 7 in einem geschlossenen Zustand;
- Fig. 9: eine weitere vorteilhafte Ausführungsform des erfindungsgemäßen Laufflächenspannelements in einem ungespannten Zustand in einer Aufsicht;
- Fig. 10: das Laufflächenspannelement aus Fig. 9, wobei beide Anschlussorgane ausgezogen sind;
- Fig. 11: eine dritte vorteilhafte Ausführungsform eines erfindungsgemäßen Laufflächenspannelements in einer schematischen, perspektivischen Darstellung; und
- Fig. 12: das Laufflächenspannelement der Fig. 11 in einer Aufsicht.

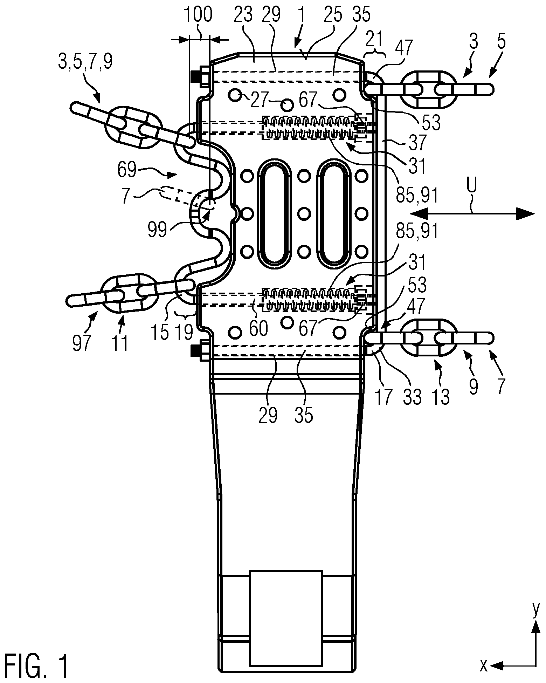

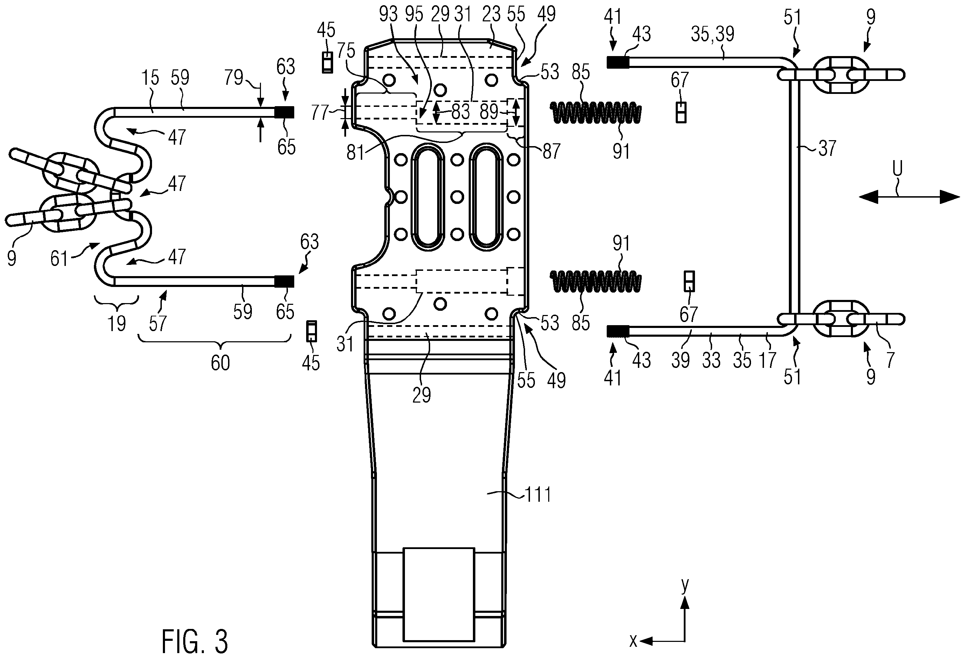

Im Folgenden ist der Aufbau eines erfindungsgemäßen Laufflächenspannelements 1 mit Bezug auf die Figuren 1 bis 3 beschrieben.

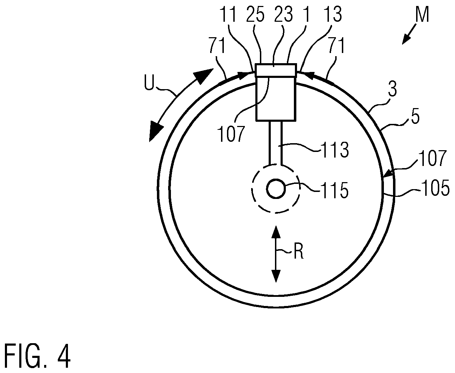

Das Laufflächenspannelement 1 kann Teil des Laufnetzes 3 einer Reifenkette 5 sein. Vom Laufnetz 3 einer Reifenkette 5 sind in den Figuren 1 bis 3 lediglich wenige Kettenglieder 7 gezeigt, welche zu Kettensträngen 9 gehören. Ein Laufnetz 3 auf einem Fahrzeugreifen ist schematisch in Fig. 4 gezeigt. Die Kettenstränge 9 erstrecken sich lediglich beispielhaft in Umfangsrichtung des Fahrzeugreifens zumindest in etwa parallel zueinander. Die Verwendung des Laufflächenspannelements 1 ist nicht auf diese Form des Laufnetzes 3 beschränkt.

Das Laufflächenspannelement 1 kann zwei Enden 11 und 13 eines Laufnetzes 3 miteinander verbinden. Die Enden 11 und 13 sind dabei in einer Umfangsrichtung U voneinander beabstandet. Die Umfangsrichtung U ist durch die Form des Laufnetzes 3 in einem an einem Fahrzeugreifen (hier noch nicht dargestellt) montierten Zustand M vorgegeben. Für das in den Figuren 1 bis 4 gezeigte Laufflächenspannelement 1 ist die Umfangsrichtung U annähernd geradlinig, da das Laufflächenspannelement 1 nur einen kleinen Abschnitt des Umfangs eines Fahrzeugreifens bedeckt.

Zur Anbringung der Enden 11 und 13 des Laufnetzes 3 weist das Laufflächenspannelement 1 zwei Anschlussorgane 15 und 17 auf, von denen jedes Anschlussorgan 15 bzw. 17 zur Verbindung mit jeweils einem Ende 11 oder 13 vorgesehen ist. Lediglich beispielhaft ist in den Figuren das Anschlussorgan 15 mit dem Ende 11 und das Anschlussorgan 17 mit dem Ende 13 des Laufnetzes verbunden.

Alternativ zu der beschriebenen Ausführungsform kann das Laufflächenspannelement 1 auch an wenigstens einer Seite mit mehr als einem Anschlussorgan 15 bzw. 17 versehen sein. Die Anschlussorgane 15 und 17 sind entlang der Umfangsrichtung U relativ zueinander beweglich. Lediglich beispielhaft ist in der beschriebenen Ausführungsform des Laufflächenspannelements 1 nur das Anschlussorgan 15 beweglich. Alternativ dazu kann auch das andere Anschlussorgan 17 oder beide Anschlussorgane 15 und 17 beweglich sein.

Die Anschlussorgane 15 und 17 weisen Verbindungsabschnitte 19 und 21 auf, welche zum Verbinden mit den Enden 11 und 13 des Laufnetzes 3 dienen können. Die beiden Verbindungsabschnitte 19 und 21 sind entlang der Umfangsrichtung U voneinander beabstandet und liegen sich in Umfangsrichtung U gegenüber.

Das Laufflächenspannelement 1 ist mit einem Grundkörper 23 versehen. Der Grundkörper 23 kann auf der Reifenlauffläche aufliegen. Vorzugsweise ist der Grundkörper 23 mit einer Traktionsfläche 25 versehen, auf der Traktionselemente 27 angeordnet sind. Lediglich beispielhaft sind die Traktionselemente 27 in den Figuren als aus der Traktionsfläche 25 hervorstehende Spitzen, sogenannte "Spikes" angedeutet.

Der Grundkörper 23 ist mit einer Reihe von im Wesentlichen parallel zur Umfangsrichtung U versehenen Bohrungen 29 und 31 versehen. Die Bohrungen 29 und 31 sind die Stellen, an denen die Anschlussorgane 15 und 17 den Grundkörper 23 durchdringen können. Dies tun sie vorzugsweise mit ihren jeweiligen Führungsabschnitten 39. Hierauf ist weiter unten näher eingegangen.

Die Bohrungen 29 dienen zur Aufnahme des Anschlussorgans 17. Die Bohrungen 31 dienen zur Aufnahme des Anschlussorgans 15. Die Bohrungen 29 und 31 müssen nicht zwingend gebohrt sein. Sie können auch durch andere Fertigungsarten erzeugt sein. Ist der Grundkörper der 23 beispielsweise als Spritzgussteil aus einem Kunststoff gefertigt, können die Bohrungen 29 und 31 direkt beim Spritzgießen erzeugt werden.

Im Folgenden ist auf die Aufnahme der Anschlussorgane 15 und 17 im Grundkörper 23 eingegangen. Dabei wird zunächst das unbeweglich aufgenommene Anschlussorgan 17 und dessen Halterung im Grundkörper 23 näher beschrieben. Anschließend folgt die Beschreibung des beweglich aufgenommenen Anschlussorgans 15 und die durch diese Anordnung ermöglichte Beweglichkeit.

Das Anschlussorgan 17 weist einen Bügel 33 auf. Der Bügel 33 besitzt zwei Schenkel 35 und einen die Schenkel verbindenden Steg 37. Die beiden Schenkel 35 verlaufen parallel zueinander und parallel zur Umfangsrichtung U. Quer zur Umfangsrichtung U sind die beiden Schenkel 35 voneinander beabstandet.

Im in den Grundkörper 23 eingesetzten Zustand ragen die Schenkel 35 durch die Bohrungen 29 hindurch. Beim Einsetzen in die Bohrungen 29 werden die Schenkel 35 durch die Bohrungen 29 geführt. Folglich können die Schenkel 35 auch als Führungsabschnitte 39 des Anschlussorgans 17 aufgefasst werden.

An ihren freien Enden 41 weisen die Schenkel 35 Außengewinde 43 auf. Im eingesetzten Zustand ragen die freien Enden 41 mit ihren Außengewinden 43 an einer dem Steg 37 gegenüberliegenden Seite des Grundkörpers 23 aus diesem heraus und lassen sich mittels Schraubenmuttern 45 sichern. Hierdurch ist das Anschlussorgan 17 sicher am Grundkörper 23 gehalten. Die Schraubenmuttern 45 stellen Querschnittsvergrößerungen 46 dar.

Die Schraubenmuttern 45 liegen im zusammengesetzten Zustand am Grundkörper 23 an. Vorzugsweise auf einer Seite des Grundkörpers 23, die in Umfangsrichtung U dem Steg 37 gegenüberliegt. Das Anschlussorgan 17 ist dabei bevorzugt unverschieblich am Grundkörper 23 gehalten. Dies ist jedoch nicht zwingend.

Im zusammengesetzten Zustand des Laufflächenspannelements 1 sind am Anschlussorgan 17 zwei Verbindungsstellen 47 zur Verbindung mit Kettensträngen 9 vorgesehen. Die Verbindungsstellen 47 sind quer zur Umfangsrichtung voneinander beabstandet. Sie werden begrenzt durch Aussparungen 49 im Grundkörper 23 und durch bogenförmige Abschnitte 51 des Bügels 33. Die bogenförmigen Abschnitte 51 sind die Abschnitte des Bügels 33, die den Steg 37 mit den Schenkeln 35 verbinden.

Durch die Aussparungen 49 im Grundkörper 23 sind seitliche Begrenzungen 53 gebildet, welche eine Bewegung der Kettenglieder 7 in den Verbindungsstellen 47 quer zur Umfangsrichtung verhindern.

Durch die Aussparungen 49 können Stirnflächen 55 im Grundkörper 23 gebildet sein, die sich quer zur Umfangsrichtung U erstrecken. Von den Stirnflächen 55 erstrecken sich die Bohrungen 29 in den Grundkörper 23. Im zusammengesetzten Zustand sind die Kettenglieder 7 der Kettenstränge 9 folglich an jeder der Verbindungsstellen 47 zwischen einer Stirnfläche 55, einer zeitlichen Begrenzung 53 und einem bogenförmigen Abschnitt 51 unverlierbar gehalten.

Der Steg 37 kann im zusammengesetzten Zustand die Bohrungen 31 für das andere Anschlussorgan 15 zumindest teilweise bedecken, wodurch die Teile des Anschlussorgans 15 geschützt sind.

Im Folgenden ist auf das andere Anschlussorgan 15 eingegangen. Der Kürze halber sind hier im Wesentlichen die Unterschiede zu dem oben beschriebenen Anschlussorgan 17 näher erläutert.

Das Anschlussorgan 15 weist ebenfalls einen Bügel 57 mit zwei parallelen Schenkeln 59 und einen die Schenkel 59 verbindenden Steg 61 auf. Die Schenkel 59 verlaufen im zusammengesetzten Zustand parallel zur Umfangsrichtung U. Freie Enden 63 der Schenkel 59 sind jeweils mit einem Außengewinde 65 versehen. Auf jedes Außengewinde 65 kann eine Schraubenmutter 67 geschraubt werden, um das Anschlussorgan 15 unverlierbar am Grundkörper 23 zu halten. Auch hier stellen die Schraubenmuttern 67 Querschnittsvergrößerungen 46 an den freien Enden 63 dar.

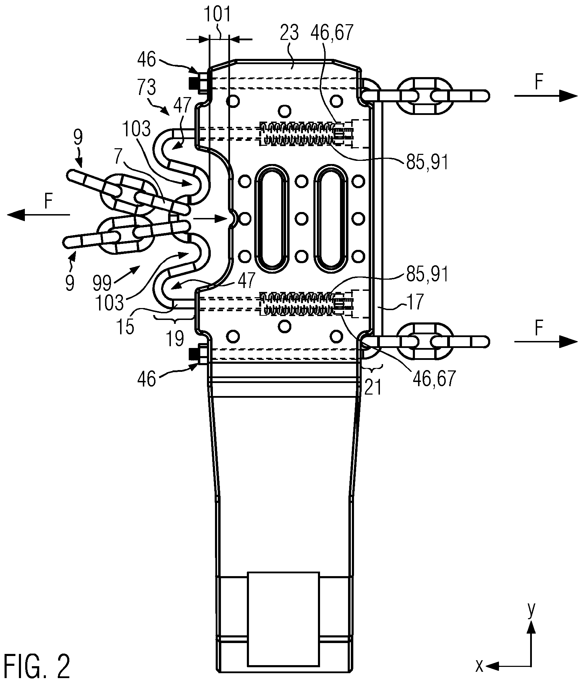

Der Steg 61 öffnet insgesamt drei quer zur Umfangsrichtung U voneinander beabstandete Verbindungsstellen 47. Hierauf ist später mit Bezug auf die Figur 2 eingegangen. Der Steg 61 bildet den Verbindungsabschnitt 19 des Anschlussorgans 15. Die Schenkel 59 bilden jeweils einen Führungsabschnitt 60 des Anschlussorgans 15.

Im zusammengesetzten Zustand ist das Anschlussorgan 15 in Umfangsrichtung U verschieblich gehalten. Hierbei lässt es sich aus einer Ruhelage 69, wie sie in Figur 1 dargestellt ist, unter Erzeugung einer federelastischen Rückstellkraft 71 in eine ausgelenkte Lage 73 bewegen, in der der Verbindungsabschnitt 19 in Umfangsrichtung weiter vom Verbindungsabschnitt 21 des zweiten Anschlussorgans 17 entfernt ist als in der Ruhelage 69.

Die Auslenkung des Anschlussorgans 15 kann durch eine Zugkraft F verursacht werden. Eine solche Zugkraft F kann beispielsweise durch einen Zug auf das Laufnetz 3 beim Abrollen des Fahrzeugreifens erzeugt werden.

Durch die federelastischen Rückstellkraft 71 entsteht ein Zug auf das Anschlussorgan 15, wodurch dieses bestrebt ist, wieder die Ruhelage 69 einzunehmen.

Im Folgenden ist die federelastische Halterung des Anschlussorgans 15 erläutert.

Die Schenkel 59 des Anschlussorgans 15, bzw. dessen Bügel 57 sind im zusammengesetzten Zustand in den Bohrungen 31 aufgenommen. Die Bohrungen 31 weisen jeweils drei Abschnitte mit unterschiedlich großen Innendurchmessern auf.

Im Folgenden ist der Übersichtlichkeit halber nur auf eine der zwei vorzugsweise identisch aufgebauten Bohrungen 31 eingegangen. Jede Bohrung weist einen ersten Abschnitt 75 auf, dessen Innendurchmesser 77 etwas größer als ein Außendurchmesser 79 eines Schenkels 59 ist. Diese Größenrelation erlaubt eine Führung des Schenkels 59 in Umfangsrichtung U bei gleichzeitiger Reduktion der Beweglichkeit quer zur Umfangsrichtung U.

Ein zweiter Abschnitt 81 der Bohrung 31 besitzt einen Innendurchmesser 83, der größer ist als der Innendurchmesser 77 des ersten Abschnitts 75. In dem zweiten Abschnitt 81 kann das Federelement 85 aufgenommen werden.

Ein dritter Abschnitt 87 schließt sich an den zweiten Abschnitt an und öffnet die Bohrung 31 zu der Seite des Grundkörpers 23, an der im zusammengesetzten Zustand der Steg 37 des zweiten Anschlussorgans 17 anliegt. Der Innendurchmesser 89 des dritten Abschnitts 87 kann gleich oder größer sein als der Innendurchmesser 83 des zweiten Abschnitts 81. Der dritte Abschnitt 87 dient zur Aufnahme der Schraubenmutter 67 im zusammengesetzten Zustand. Bevorzugt ist der dritte Abschnitt 87 so bemessen, dass die Schraubenmutter 67 durch ein Werkzeug erreicht und am Außengewinde 65 befestigt werden kann.

Im zusammengesetzten Zustand ist das Federelement 85, welches als Schraubendruckfeder 91 ausgestaltet ist, im zweiten Abschnitt 81 aufgenommen. Der Schenkel 59 durchdringt dabei das Federelement 85 vollständig, sodass sein freies Ende 63 in den dritten Abschnitts 87 ragt, wo die Schraubenmutter 67 mit dem Außengewinde 65 verbunden ist. Die Schraubendruckfeder 91 verläuft schraubenförmig um den Schenkeln 59 herum. Der Schenkel 59 und die Schraubendruckfeder 91 sind dabei koaxial zueinander angeordnet.

Im zusammengesetzten Zustand ist die Schraubendruckfeder 91 zwischen der Schraubenmutter 67 und einem Übergangsbereich 93 zwischen dem ersten Abschnitt 75 und dem zweiten Abschnitt 81 angeordnet. Dadurch, dass der Innendurchmesser 77 des ersten Abschnitts 75 kleiner ist als der Innendurchmesser 83 des zweiten Abschnitts 81 stößt die Schraubendruckfeder 91 an eine Innenseite 95 der Bohrung 31 an und ist gegen ein Verschieben in den ersten Abschnitt 75 gesichert.

Beim Wirken einer Zugkraft F, welche das Anschlussorgan 15 aus dem Grundkörper 23 herausbewegt, wird die Schraubendruckfeder 91 zwischen der Schraubenmutter 67 und der Innenseite 95 der Bohrung zusammengedrückt. Das freie Ende 63 kann dabei zusammen mit der Schraubenmutter 67 bis in den zweiten Abschnitt 81 dringen.

Durch die Kompression der Schraubendruckfeder 91 wird die Rückstellkraft 71 erzeugt, welche das Anschlussorgan 15 wieder zurück zur Ruhelage 69 zieht. Auf diese Weise ist das Anschlussorgan 15 federelastisch im Grundkörper 23 gehalten.

Im Folgenden ist auf die Möglichkeit der Längenverstellung für das Laufnetz 3 eingegangen. Der Verbindungsabschnitt 19 des Anschlussorgans 15 weist insgesamt 3 Verbindungsstellen 47 auf.

Dabei ist eine quer zur Umfangsrichtung U mittig angeordnete Verbindungsstelle 47 näher am Grundkörper 23 als die beiden quer zur Umfangsrichtung U außerhalb der mittig angeordneten Verbindungsstelle 47 gelegenen Verbindungsstellen 47. Die beiden außerhalb gelegenen Verbindungsstellen 47 sind äquidistant zum Grundkörper 23 angeordnet.

Alternativ dazu können auch die drei Verbindungsstellen 47 im gleichen Abstand zum Grundkörper 23 angeordnet sein. Zum Verkürzen eines oder mehrerer Kettenstränge 9, bzw. des die Kettenstränge 9 aufweisenden Laufnetzes 3, kann zwischen den Verbindungsstellen 47 gewechselt werden, wodurch die Kettenstränge 9 jeweils unterschiedlich schräg in Bezug auf die Umfangsrichtung U verlaufen. Je steiler die Kettenstränge 9 zur Umfangsrichtung U verlaufen, umso kürzer ist das Laufnetz 3 in Umfangsrichtung.

Die drei Verbindungsstellen 47 erlauben zwei unterschiedliche Konfigurationen 97 und 99 für das Laufnetz 3. Die Konfiguration 97 ist in Fig. 1 dargestellt. Die Konfiguration 99 ist in Fig. 2 dargestellt.

Bei der Konfiguration 97 sind je einer der beiden Kettenstränge 9 in einer der äußeren Verbindungsstellen 47 aufgenommen. In der Konfiguration 99 sind dagegen beide Kettenstränge 9 zusammen in der mittleren Verbindungsstelle 47 aufgenommen. Da die mittlere Verbindungsstelle 47 näher am Grundkörper 23 liegt, ist bei der Konfiguration 99 das Laufnetz 3 verkürzt. Zusätzlich ergibt sich eine Verkürzung des Laufnetzes 3 durch den schrägeren Verlauf der Kettenstränge 9 in Bezug auf die Umfangsrichtung U.

Bei gleicher Reifenkette kann also die Konfiguration 99 für einen kleineren Fahrzeugreifen und die Konfiguration 97 für einen größeren Fahrzeugreifen verwendet werden. Alternativ dazu kann bei gleichbleibenden Fahrzeugreifen anhand der Konfigurationen die Beweglichkeit des Laufnetzes 3 eingestellt werden.

Der Längenunterschied 100 zwischen beiden Konfigurationen 97 und 99 ist in Fig. 1 dargestellt, wobei für die Konfiguration 99 lediglich ein Kettenglied angedeutet ist.

Um von einer Konfiguration zur anderen Konfiguration zu wechseln, muss das Anschlussorgan 15 so weit aus dem Grundkörper 23 herausgezogen werden, bis eine Lücke 101 zwischen einem Sperrabschnitt 103 des Anschlussorgans 15 und dem Grundkörper 23 ausreichend groß ist, um die Kettenglieder von einer zur anderen Verbindungsstelle 47 zu führen. Dies ist in Fig. 2 gezeigt.

Die Sperrabschnitte 103 sind als bogenförmige Abschnitte des Stegs 61 geformt und zwischen den Verbindungsstellen 47 angeordnet. Insgesamt besteht der Steg aus fünf Bögen, wobei drei Bögen die Verbindungsstellen 47 bilden und die zwei Bögen zwischen den Verbindungstellen 47 die Sperrabschnitte 103 bilden.

Fig. 4 zeigt schematisch eine Reifenkette 5 und deren Laufnetz 3 in einem an einem Fahrzeugreifen 105 montierten Zustand M.

Lediglich beispielhaft ist ein Laufflächenspannelement 1 dargestellt. Bevorzugt ist die Reifenkette 5 jedoch mit einer Mehrzahl von Laufflächenspannelement 1 versehen.

Das Laufflächenspannelement 1 dient zum Erzeugen einer auf das Laufnetz 3 wirkenden Zugkraft 71, durch die das Laufnetz 3 gespannt werden kann. Das Lauflächenspannelement 1 weist einen Grundkörper 23 auf, der eine Unterseite 107 zur Auflage auf der Lauffläche des Fahrzeugreifens und eine der Unterseite 107 gegenüberliegende Traktionsfläche 25 auf.

Über einen sich in radialer Richtung R vom übrigen Grundkörper wegerstreckenden Ausleger 111 kann der Grundkörper 23 mit einer Befestigungsvorrichtung 113 verbunden sein, über die die Reifenkette 5 mit einer Felge 115 des Fahrzeugreifens 105 verbunden ist. Der Ausleger 111 ist vorzugsweise einstückig mit dem übrigen Grundkörper 23 gebildet.

Der Grundkörper 23 muss keinen Ausleger 111 aufweisen. Ein Grundkörper 23 ohne Ausleger kann beispielsweise nur über Kettenstränge 9 mit der übrigen Reifenkette 5 verbunden sein. Die Reifenkette 5 kann auch jeweils einen oder mehrere Grundkörper 23 mit Ausleger 111 und einen oder mehrere Grundkörper 23 ohne Ausleger 111 aufweisen.

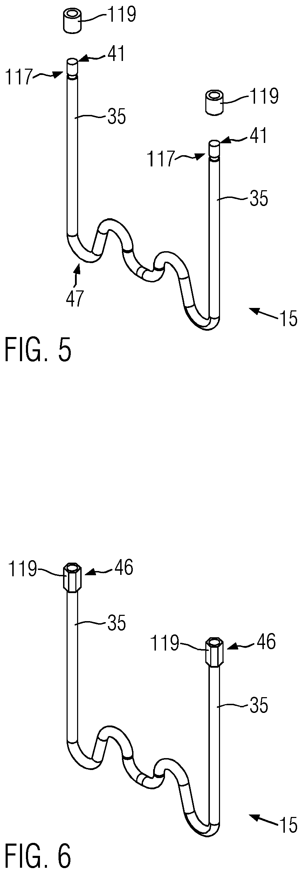

Im Folgenden ist eine zweite Ausführungsform eines Anschlussorgans 15 mit Bezug auf die Figuren 5 und 6 beschrieben. Der Kürze halber ist dabei nur auf die Unterschiede zu den zuvor beschriebenen Anschlussorganen 15 bzw. 17 eingegangen.

Lediglich beispielhaft ist das Anschlussorgan 15 mit drei Verbindungsstellen 47 dargestellt. Auf die Anzahl der Verbindungsstellen 47 kommt es hier jedoch nicht an. Das Anschlussorgan 15 kann mit jedweder erforderlichen Anzahl von Verbindungsstellen 47 versehen sein.

Die dargestellte Ausführungsform unterscheidet sich in Form der Querschnittsvergrößerung 46 an den freien Enden 41. Anstelle eines Außengewindes 43 für eine Schraubenmutter 45 sind die Schenkel 35 im Bereich der freien Enden 41 jeweils mit einer umlaufenden Nut 117 zur Verbindung mit einer Hülse 119 versehen.

Auf jeden Schenkel 35 kann eine Hülse 119 als Querschnittsvergrößerung 46 gepresst sein. Bevorzugt ist die Hülse 119 an einer Stelle des Schenkels angebracht, an der die Hülse 119 die Nut 117 überdeckt. Dabei kann die Hülse 119 bündig mit dem Ende des Schenkels 35 abschließen.

Die Hülse 119 kann mit der Nut 117 eine formschlüssige Verbindung bilden und somit unverlierbar am Schenkel 35 gehalten sein.

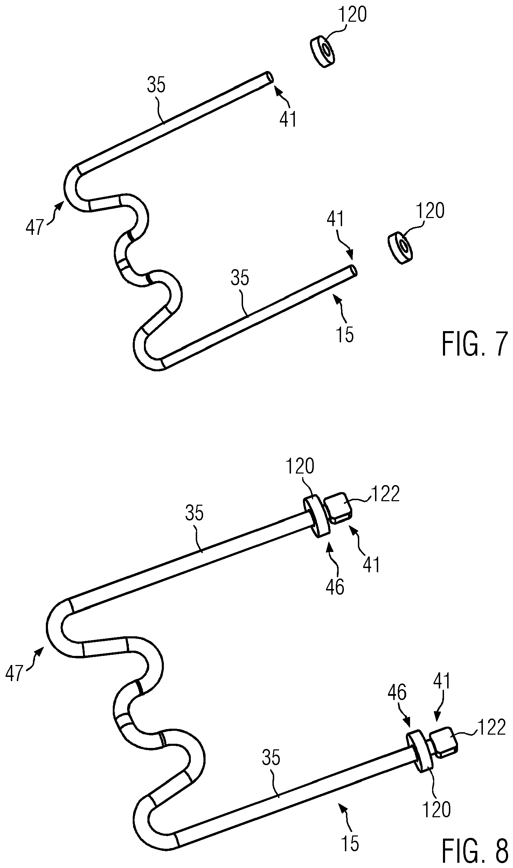

Die Figuren 7 und 8 zeigen eine weitere Ausführungsform eines Anschlussorgans 15. Der Kürze halber ist auch hier nur auf die Unterschiede zu den zuvor beschriebenen Ausführungsformen der Anschlussorgane 15 bzw. 17 eingegangen.

Um die Querschnittsvergrößerungen 46 an den freien Enden 41 der Schenkel 35 zu erzeugen, werden die freien Enden 41 umgeformt, wobei umgeformte Abschnitte 122 entstehen. An den umgeformten Abschnitten 122 sind die freien Enden 41 flachgedrückt und dadurch verbreitert. Diese verbreiterten Stellen können bereits selbst als Querschnittsvergrößerungen 46 dienen.

Um die Sicherheit der Halterung des Anschlussorgans 15 im Grundkörper 23 und/oder das Abstützen eines Federelements 85 an einer Querschnittsvergrößerung 46 zu verbessern, können Ringscheiben 120 vorgesehen sein, welche auf den Schenkeln 35 angeordnet sind. Die Schenkel 35 durchdringen dabei die Ringscheiben 120. Die Ringscheiben 120 sind durch die umgeformten Abschnitte 122 verliersicher auf den Schenkeln 35 gehalten.

Durch die Ringscheiben 120 sind um die Schenkel 35 umlaufende Querschnittsvergrößerungen 46 gebildet. Die Ringscheiben können auch andere Formen als in den Figuren dargestellt aufweisen. Beispielsweise können diese auch einen polygonalen, ovalen, kreuzförmigen oder anderen geeigneten Querschnitt besitzen.

In den oben beschriebenen Ausführungsformen des Anschlussorgans ist lediglich beispielhaft auf ein Anschlussorgan in der Ausgestaltung gemäß dem Bezugszeichen 15 (Fig. 1-4) Bezug genommen. Selbstverständlich kann auch ein Anschlussorgan in der Ausgestaltung gemäß dem Bezugszeichen 17 der Fig. 1-4 mit den beschriebenen Merkmalen versehen sein.

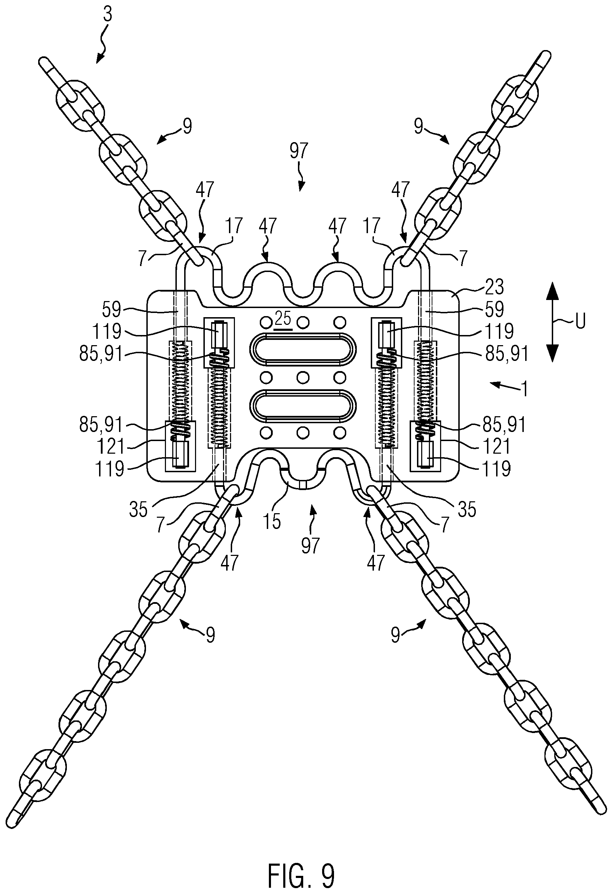

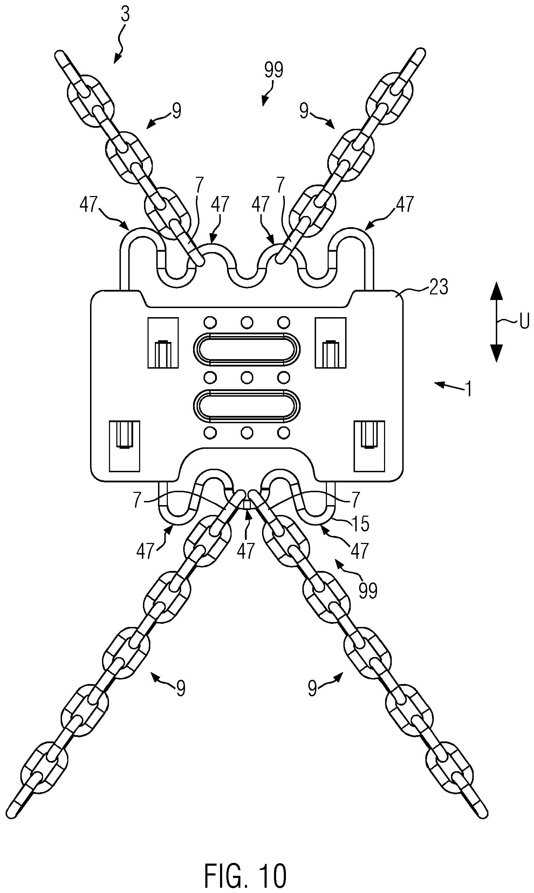

Im Folgenden ist eine zweite vorteilhafte Ausführungsform eines erfindungsgemäßen Laufflächenspannelements 1 mit Bezug auf die Figuren 9 und 10 beschrieben. Der Kürze halber ist nur auf die Unterschiede zu der zuvor beschriebenen Ausführungsform eingegangen.

Die Figuren 9 und 10 zeigen das Laufflächenspannelement 1 jeweils in einer Aufsicht, wobei der Grundkörper 23 halbtransparent dargestellt ist, um auch die teilweise im Grundkörper 23 liegenden Elemente sichtbar zu machen.

Lediglich beispielhaft sind die Kettenstränge 9 in den Figuren 9 und 10 als Teile eines Laufnetzes 3 dargestellt, welches von dem beispielhaft dargestellten Gürtellaufnetz der Figuren 1 bis 4 abweicht. Alternativ dazu kann das erfindungsgemäße Laufflächenspannelement 1 auch mit einem anderen Laufnetz 3 verwendet werden.

Bei der zweiten Ausführungsform des Laufflächenspannelements 1 sind beide Anschlussorgane 15 und 17 verschieblich im Grundkörper 23 gehalten, wobei jedes Anschlussorgan 15 und 17 an seinen beiden Schenkeln 35 bzw. 59 mit jeweils einem Federelement 85 versehen ist.

Die Verbindungsabschnitte 19 und 21 der beiden Anschlussorgane 15 und 17 sind unter Auslenkung der Federelemente 85 federelastisch vom Grundkörper 23 weg beweglich. Lediglich beispielhaft sind die Federelemente 85 als Schraubendruckfedern 91 dargestellt.

An ihren freien Enden sind die Schenkel 35 bzw. 59 der Anschlussorgane 15 und 17 mit den mit Bezug auf die Figuren 5 und 6 beschriebenen Hülsen 119 versehen. Hierdurch können die Anschlussorgane 15 und 17 unverlierbar am Grundkörper 23 gehalten sein.

Durch die Hülsen 119 können auch die Federelemente 85 abgestützt sein, sodass diese jeweils zwischen einer Hülse 119 und einem feststehenden Teil des Grundkörpers 23 komprimierbar sind, wenn das jeweilige Anschlussorgan 15 oder 17 vom Grundkörper 23 weggezogen wird.

Um die Montage der Hülsen 119 einfach zu gestalten, ist der Grundkörper 23 mit sich quer zur Traktionsfläche 25 durch den Grundkörper 23 hindurch erstreckenden Montageöffnungen 121 versehen, welche bei der Montage den Zugriff auf die freien Enden 41 und 63 der Anschlussorgane 15 und 17 erlauben. Dadurch kann die Montage der Hülsen 119 auf die Schenkel 35 und 59 erleichtert sein.

Ein weiterer Unterschied der zweiten Ausführungsform im Vergleich zu der ersten Ausführungsform des erfindungsgemäßen Laufflächenspannelements 1 liegt in der Ausgestaltung der Anschlussorgane 15 und 17. Dies ist jedoch nicht zwingend. Die Anschlussorgane 15 und 17 können auch entsprechend denen der ersten Ausführungsform ausgestaltet sein.

Ein erstes Anschlussorgan 15 ist im Wesentlichen ähnlich zu dem Anschlussorgan 15 der ersten Ausführungsform geformt und weist drei Verbindungsstellen 47 auf.

Das zweite Anschlussorgan 17 weist insgesamt vier Verbindungsstellen 47 auf. Dabei ist vorgesehen, dass jede Verbindungsstelle 47 bevorzugt ein Kettenglied 7 eines Kettenstranges 9 aufnehmen kann.

In dem in Fig. 9 dargestellten Beispiel, bei dem auf der Seite des Anschlussorgans 17 zwei Kettenstränge 9 angeordnet sind, sind die Kettenstränge 9 jeweils mit einem Kettenglied an den beiden quer zur Umfangsrichtung U außen gelegenen Verbindungsstellen 47 eingehängt.

Bei dem gegenüberliegenden Anschlussorgan 15 sind die beiden Kettenstränge 9 jeweils mit einem Kettenglied 7 in den beiden äußeren Verbindungsstellen 47 aufgenommen. Die Konfiguration entspricht also der Konfiguration 97, wie sie auch mit Bezug auf die Figur 1 für die erste Ausführungsform beschrieben ist. Dies gilt auch für das gegenüberliegende Anschlussorgan 17.

Die Figur 10 zeigt das Laufflächenspannelement 1 der Figur 9, wobei die Kettenstränge 9 an beiden Anschlussorgane 15 und 17 an den jeweils innen liegenden Verbindungsstellen 47 angeordnet sind. Dies entspricht der Konfiguration 99.

Für das Anschlussorgan 15 bedeutet dies, dass beide Kettenstränge 9 jeweils mit einem Kettenglied 7 gemeinsam in der mittleren Verbindungsstelle 47 aufgenommen sind. Für das Anschlussorgan 17 bedeutet dies hingegen, dass jeder Kettenstrang 9 mit jeweils einem Kettenglied 7 in einer der beiden innen liegenden Verbindungsstellen 47 aufgenommen ist.

Da auf beiden Seiten die quer zur Umfangsrichtung U innenliegenden Verbindungsstellen 47 näher am Grundkörper 23 liegen, können die Kettenstränge 9 schräger verlaufen. Das Laufnetz 3 lässt sich dadurch verkürzen.

Alternativ dazu können die Verbindungsstellen 47 jeweils eines Anschlussorgans 15 oder 17 auch gleich weit vom Grundkörper 23 entfernt sein, wobei trotzdem eine Verkürzung des Laufnetzes 3 erreicht werden kann.

In dem in den Figuren 9 und 10 dargestellten Beispiel erfolgt eine Verkürzung des Laufnetzes 3 sowohl durch den Schräglauf der Kettenstränge 9 als auch durch die Anordnung der Verbindungsstellen 47, die unterschiedlich weit vom Grundkörper 23 entfernt sind.

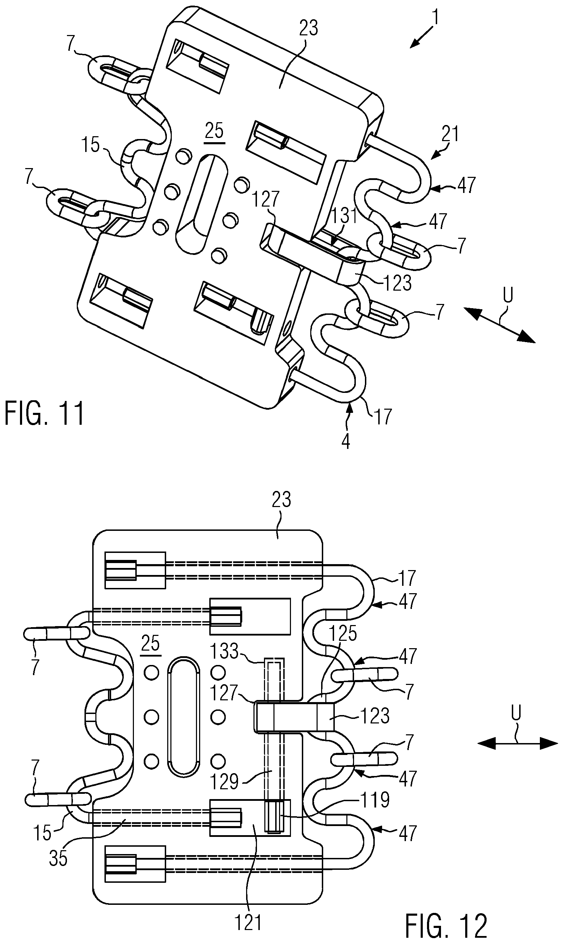

Im Folgenden ist eine dritte vorteilhafte Ausführungsform eines erfindungsgemäßen Laufflächenspannelementes 1 mit Bezug auf die Figuren 11 und 12 beschrieben. Auch hier wird, der Kürze halber, nur auf die Unterschiede zu den zuvor beschriebenen Ausführungsformen eingegangen.

Die Figur 11 zeigt eine perspektivische Darstellung und die Figur 12 eine Aufsicht des Laufflächenspannelementes 1. Der Einfachheit halber sind hier nur einzelne Kettenglieder 7 angedeutet. Ein Laufnetz 3, zu dem die Kettenglieder 7 gehören, kann wie bei einer der zuvor beschriebenen Ausführungsformen oder auch abweichend hiervon ausgestaltet sein. Dies hängt vom jeweiligen Einsatzzweck ab.

Die in den Figuren 11 und 12 dargestellte Ausführungsform unterscheidet sich in erster Linie dadurch von den zuvor dargestellten Ausführungsformen, dass als Federelement 85 ein elastisches Band 123 vorgesehen ist.

Das elastische Band 123 ist hierbei nicht mit den Schenkeln 35 oder 59 eines der Anschlussorgane 15 oder 17 verbunden. Stattdessen ist das elastische Band 123 in einem bogenförmigen Abschnitt 125 des Anschlussorgans 17 eingehängt und unverlierbar am Grundkörper 23 gehalten.

Der Grundkörper 23 weist eine Einbuchtung 127 auf, in der das elastische Band 123 teilweise aufgenommen ist. Die Einbuchtung 127 erstreckt sich entlang der Umfangsrichtung U in den Grundkörper 23 hinein. Im Bereich der Einbuchtung 127 ist der Grundkörper 23 quer zur Traktionsfläche 25 durchgängig geöffnet.

Um das elastische Band 123 unverlierbar am Grundkörper 23 zu halten, ist ein Bolzen 129 vorgesehen, welcher quer zur Umfangsrichtung U durch die Einbuchtung 127 ragt und eine innere Öffnung 131 des elastischen Bandes durchdringt. Mit anderen Worten sind der bogenförmige Abschnitt 125 und der Bolzen 129 abschnittsweise in der inneren Öffnung 131 des elastischen Bandes 123 angeordnet. Das elastische Band 123 ist so unverlierbar am Grundköper gehalten.

Bei einer vom Grundkörper 23 weg gerichteten Bewegung des Anschlussorgans 17 wird das elastische Band 123 gespannt und erzeugt eine federelastische Rückstellkraft, die das Anschlussorgan 17 wieder zurück zum Grundkörper 23 zieht.

Der Bolzen 129 ist in einer quer zur Umfangsrichtung U verlaufenden Bohrung 133 im Grundkörper 23 aufgenommen, wodurch er gegen ein Verrutschen in Umfangsrichtung U gesichert ist.

Um den Bolzen 129 auch quer zur Umfangsrichtung U sicher am Grundkörper zu halten, ist der Bolzen 129 an einem Ende, welches in eine der Montageöffnungen 121 für einen Schenkel 35 des Anschlussorgans 15 ragt, mit einer Hülse 119 versehen, die die Position des Bolzens 129 formschlüssig sichert.

Lediglich beispielhaft ist das Anschlussorgan 15 unverschieblich am Grundkörper 23 gehalten. Alternativ dazu könnte auch dieses Anschlussorgan 15 mit einem elastischen Band 123 versehen sein. Hierzu könnte es beispielsweise auch mit einem bogenförmigen Abschnitt 125 versehen sein. Ebenfalls ist es möglich, dieses Anschlussorgan 15 mit wenigstens einer Schraubendruckfeder 91 wie bei den anderen Ausführungsformen zu versehen. **Bezugszeichen**
- 1: Laufflächenspannelement
- 3: Laufnetz
- 5: Reifenkette
- 7: Kettenglieder
- 9: Kettenstränge
- 11,13: Enden des Laufnetzes
- 15,17: Anschlussorgane
- 19, 21: Verbindungsabschnitte
- 23: Grundkörper
- 25: Traktionsfläche
- 27: Traktionselemente
- 29, 31: Bohrungen
- 33: Bügel
- 35: Schenkel
- 37: Steg
- 39: Führungsabschnitt
- 41: Freies Ende
- 43: Außengewinde
- 45: Schraubenmutter
- 46: Querschnittsvergrößerung
- 47: Verbindungsstellen
- 49: Aussparung
- 51: Bogenförmiger Abschnitt
- 53: Seitliche Begrenzung
- 55: Stirnfläche
- 57: Bügel
- 59: Schenkel
- 60: Führungsabschnitt
- 61: Steg
- 63: Freies Ende
- 65: Außengewinde
- 67: Schraubenmutter
- 69: Ruhelage
- 71: Rückstellkraft
- 73: ausgelenkte Lage
- 75: Erster Abschnitt
- 77: Innendurchmesser des ersten Abschnitts
- 79: Außendurchmesser des Schenkels
- 81: Zweiter Abschnitt
- 83: Innendurchmesser des zweiten Abschnitts
- 85: Federelement
- 87: Dritter Abschnitt
- 89: Innendurchmesser des dritten Abschnitts
- 91: Schraubendruckfeder
- 93: Übergangsbereich
- 95: Innenseite der Bohrung
- 97, 99: Konfigurationen
- 101: Lücke
- 103: Sperrabschnitt
- 105: Fahrzeugreifen
- 107: Lauffläche
- 111: Ausleger
- 113: Befestigungsvorrichtung
- 115: Felge
- 117: Nut
- 119: Hülse
- 120: Ringscheibe
- 121: Montageöffnung
- 122: umgeformter Abschnitt
- 123: Elastisches Band
- 125: Bogenförmiger Abschnitt
- 127: Einbuchtung
- 129: Bolzen
- 131: Innere Öffnung
- 133: Bohrung

- F: Zugkraft
- M: Montierter Zustand
- R: Radiale Richtung
- U: Umfangsrichtung

## Patentansprüche

1. Laufflächenspannelement (1) für eine an einem Fahrzeugreifen (105) anbringbare Reifenkette (5), wobei das Laufflächenspannelement (1) ausgestaltet ist, im am Fahrzeugreifen (105) montierten Zustand (M) der Reifenkette (5) auf einer Lauffläche (107) des Fahrzeugreifens (105) aufzuliegen, wobei wenigstens zwei Anschlussorgane (15, 17) zur Anbringung zweier in Umfangsrichtung (U) beabstandeter Enden (11, 13) eines im montierten Zustand (M) der Reifenkette (5) auf der Lauffläche (107) des Fahrzeugreifens (105) aufliegenden Laufnetzes (3) vorhanden sind, wobei die Anschlussorgane (15, 17) in Umfangsrichtung (U) relativ zueinander unter Erzeugung einer federelastischen Rückstellkraft (71) voneinander weg beweglich miteinander verbunden sind, **dadurch gekennzeichnet, dass** wenigstens ein Anschlussorgan (15, 17) einen Bügel (33, 57) mit zwei Schenkeln (35, 59) aufweist, wobei die Schenkel (35, 59) im Wesentlichen parallel zur Umfangsrichtung (U) verlaufen und die Schenkel (35, 59) des wenigstens einen Bügels (33, 57) als Führungsabschnitte (39, 60) und ein die Schenkel (35, 59) verbindender Steg (37, 61) als Verbindungsabschnitt (19, 21) ausgestaltet sind.

2. Laufflächenspannelement (1) nach Anspruch 1, wobei wenigstens ein Federelement (85) vorgesehen ist, über das die wenigstens zwei Anschlussorgane (15, 17) kraftübertragend gekoppelt sind.

3. Laufflächenspannelement (1) nach Anspruch 1 oder 2, wobei die Anschlussorgane (15, 17) jeweils einen Verbindungsabschnitt (19, 21) zum Anschließen des Laufnetzes (3) aufweisen und wobei sich die für die unterschiedlichen Enden (11, 13) des Laufnetzes (3) vorgesehenen Verbindungsabschnitte (19, 21) in Umfangsrichtung (U) gegenüberliegen.

4. Laufflächenspannelement (1) nach einem der Ansprüche 1 bis 3, wobei wenigstens eines der Anschlussorgane (15, 17) wenigstens einen relativ zum wenigstens einen anderen Anschlussorgan (15, 17) verschieblich ausgestalteten Führungsabschnitt (39, 60) aufweist.

5. Laufflächenspannelement (1) nach Anspruch 4, wobei das wenigstens eine Federelement (85) eine Schraubendruckfeder (91) ist und zumindest abschnittsweise schraubenförmig um den Führungsabschnitt (39, 60) herum verläuft.

6. Laufflächenspannelement (1) nach einem der Ansprüche 1 bis 5, wobei die Anschlussorgane (15, 17) in einem zur Auflage auf der Reifenlauffläche (107) ausgestalteten Grundkörper (23) unverlierbar gehalten sind.

7. Laufflächenspannelement (1) nach Anspruch 6, wobei der wenigstens eine Führungsabschnitt (39, 60) wenigstens eines der Anschlussorgane (15, 17) den Grundkörper (23) an wenigstens einer Stelle (29, 31) zumindest abschnittsweise durchdringt.

8. Laufflächenspannelement (1) nach Anspruch 7, wobei der wenigstens eine Führungsabschnitt (39, 60) wenigstens eines Anschlussorgans (15, 17) verschieblich in dem Grundkörper (23) gehalten ist.

9. Laufflächenspannelement (1) nach einem der Ansprüche 6 bis 8, wobei die wenigstens zwei Anschlussorgane (15, 17) am Grundkörper (23) gehaltene Bügel (33, 57) aufweisen, von denen einer in Bezug auf den Grundkörper (23) verschieblich und der andere unverschieblich gehalten ist.

10. Laufflächenspannelement (1) nach einem der Ansprüche 6 bis 9, wobei der Grundkörper (23) wenigstens eine sich entlang der Umfangsrichtung (U) erstreckende Bohrung (29, 31) aufweist, in der sowohl der wenigstens eine Führungsabschnitt (39, 60) als auch das wenigstens eine Federelement (85) aufgenommen sind.

11. Reifenkette (5) für einen Fahrzeugreifen (10), wobei die Reifenkette (5) ein Laufnetz (3) aufweist, das in einem montierten Zustand (M) auf der Lauffläche (107) des Fahrzeugreifens (105) aufliegt und wenigstens abschnittsweise in Umfangsrichtung (U) des Fahrzeugreifens (105) verläuft, und wobei die Reifenkette (5) mit wenigstens einem Laufflächenspannelement (1) nach einem der Ansprüche 1 bis 10 versehen ist, durch das wenigstens zwei sich in Umfangsrichtung (U) gegenüberliegende Enden (11, 13) des Laufnetzes (3) über eine in Umfangsrichtung (U) federelastische Verbindung voneinander weg beweglich gekoppelt sind.

12. Reifenkette (5) nach Anspruch 11, wobei das wenigstens eine Laufflächenspannelement (1) wenigstens drei quer zur Umfangsrichtung (U) voneinander beabstandete Verbindungsstellen (47) für Kettenglieder (7) jeweils eines Endes (11, 13) des Laufnetzes (3) aufweist, wobei wenigstens zwei der Verbindungsstellen (47) gleich oder unterschiedlich weit vom gegenüberliegenden Ende (11, 13) des Laufnetzes (3) entfernt sind.

13. Reifenkette (5) nach Anspruch 11 oder 12, wobei die beiden Enden (11, 13) des Laufnetzes (3) über ein Laufflächenspannelement (1) nach einem der Ansprüche 1 bis 12 miteinander verbunden sind.

## Claims

1. A tread tensioning member (1) for a tire chain (5) attachable to a vehicle tire (105), wherein the tread tensioning member (1) is configured to rest on a tread (107) of the vehicle tire (105) in a mounted state (M) of the tire chain (5) on the vehicle tire (105), wherein at least two connecting elements (15, 17) are provided for attaching two ends (11, 13) of a chain net (3) resting on the tread (107) of the vehicle tyre (105) in the mounted state (M) of the tire chain (5) spaced along the circumference (U), the connecting members (15, 17) being connected to each other so as to be movable away from one another in the circumferential direction (U) while generating an elastic restoring force (71),
**characterized in that** at least one connecting member (15, 17) includes a bracket (33, 57) having two legs (35, 59) wherein the legs (35, 59) extend substantially parallel to the circumferential direction (U) and the legs (35, 59) of the at least one bracket (33, 57) are formed as guiding portions (39, 60) and a web (37, 61) connecting the legs (35, 59) is formed as a connecting portion (19, 21).

2. The tread tensioning member (1) according to claim 1, wherein at least one spring element (85) is provided by means of which the at least two connecting elements (15, 17) are coupled for transfer of force.

3. The tread tensioning member (1) according to claims 1 or 2, wherein the connecting elements (15,17) each include a connecting portion (19, 21) for attaching the chain net (3) and wherein the connecting portions (19, 21) provided for the different ends (11, 13) of the chain net (3) oppose each other in the circumferential direction (U).

4. The tread tensioning member (1) according to any one of claims 1 to 3, wherein at least one of the connecting elements (15, 17) includes at least one guiding portion (39, 60) configured to be slidable relative to the at least one other connecting element (15, 17).

5. The tread tensioning member (1) according to claim 4, wherein the at least one spring element (85) is a helical compression spring (91) and extends at least partially in helical shape around the guiding portion (39, 60).

6. The tread tensioning member (1) according to any one of claims 1 to 5, wherein the connecting elements (15, 17) are retained captive in a base body (23) configured to rest on the tire tread (107).

7. The tread tensioning member (1) according to claim 6, wherein the at least one guiding portion (39, 60) of at least one of the connecting elements (15, 17) penetrates the base body (23) at least partially at at least one location (29, 31).

8. The tread tensioning member (1) according to claim 7, wherein the at least one guiding portion (39, 60) of at least one connecting element (15, 17) is held slidably in the base body (23).

9. The tread tensioning member (1) according to any one of claims 6 to 8, wherein the at least two connecting elements (15, 17) include brackets (33, 57) held on the base body (23), one of which is held slidable with respect to the base body (23) and the other one of which is held non-slidable.

10. The tread tensioning member (1) according to any one of claims 6 to 9, wherein the base body (23) includes at least one bore (29, 31) extending along the circumferential direction (U) in which both the at least one guiding portion (39, 60) and the at least one spring element (85) are accommodated.

11. A tire chain (5) for a vehicle tire (10) wherein the tire chain (5) includes a chain net (3) which, in a mounted state (M), rests on the tread (107) of the vehicle tire (105) and extends at least partially in the circumferential direction (U) of the vehicle tire (105), and wherein the tire chain (5) is provided with at least one tread tensioning member (1) according to any one of claims 1 to 10, by means of which at least two ends (11, 13) of the chain net (3) opposing each other in the circumferential direction (U) are coupled so as to be movable away from each other by means of a connection having elasticity in the circumferential direction (U).

12. The tire chain (5) according to claim 11, wherein the at least one tread tensioning member (1) includes at least three respective connection points (47) for chain links (7) of an end (11, 13) of the chain net (3) spaced apart from each other transverse to the circumferential direction (U), wherein at least two of the connection points (47) are arranged with the same or different distance to the opposite end (11, 13) of the chain net (3).

13. The tire chain (5) according to claims 11 or 12, wherein the two ends (11, 13) of the chain net (3) are connected to each other by means of a tread tensioning member (1) according to any one of claims 1 to 12.

## Revendications

1. Élément de tension de surface de roulement (1) pour une chaîne de pneumatique (5) pouvant être attachée au niveau d'un pneumatique de véhicule (105), dans lequel l'élément de tension de surface de roulement (1) est conçu pour reposer sur une bande de roulement (107) du pneumatique de véhicule (105) lorsque la chaîne de pneumatique (5) se trouve à l'état monté (M) sur le pneumatique de véhicule (105), dans lequel au moins deux éléments de raccordement (15, 17) permettant d'attacher deux extrémités (11, 13), espacées dans la direction périphérique (U), d'un filet de roulement (3) reposant sur la bande de roulement (107) du pneumatique de véhicule (105) à l'état monté (M) de la chaîne de pneumatique (5) sont présents, dans lequel les éléments de raccordement (15, 17) sont reliés l'un à l'autre de manière à pouvoir être éloignés l'un de l'autre dans la direction périphérique (U) avec production d'une force de rappel à élasticité de ressort (71), **caractérisé en ce qu'**au moins un élément de raccordement (15, 17) présente un étrier (33, 57) avec deux branches (35, 59), dans lequel les branches (35, 59) s'étendent de manière essentiellement parallèle à la direction périphérique (U) et les branches (59, 35) du au moins un étrier (33, 57) sont conçues pour être des sections de guidage (60, 59) et une barrette reliant les branches (39, 59) est conçue pour être une section de liaison (19, 21).

2. Élément de tension de surface de roulement (1) selon la revendication 1, dans lequel au moins un élément à ressort (85) est prévu, par l'intermédiaire duquel les au moins deux éléments de raccordement (15, 17) sont couplés par transmission de force.

3. Élément de tension de surface de roulement (1) selon la revendication 1 ou 2, dans lequel les éléments de raccordement (15, 17) présentent respectivement une section de liaison (19, 21) permettant de raccorder le filet de roulement (3) et dans lequel les sections de liaison (19, 21) prévues pour les différentes extrémités (11, 13) du filet de roulement (3) se font face dans la direction périphérique (U).

4. Élément de tension de surface de roulement (1) selon l'une quelconque des revendications 1 à 3, dans lequel au moins un des éléments de raccordement (15, 17) présente au moins une section de guidage (39, 60) conçue de manière à pouvoir être déplacée par rapport à au moins un autre élément de raccordement (15, 17).

5. Élément de tension de surface de roulement (1) selon la revendication 4, dans lequel le au moins un élément à ressort (85) est un ressort de compression hélicoïdal (91) et s'étend de manière hélicoïdale au moins par sections autour de la section de guidage (39, 60).

6. Élément de tension de surface de roulement (1) selon l'une quelconque des revendications 1 à 5, dans lequel les éléments de raccordement (15, 17) sont retenus de manière imperdable dans un corps de base (23) conçu pour s'appuyer sur la bande de roulement de pneumatique (107).

7. Élément de tension de surface de roulement (1) selon la revendication 6, dans lequel la au moins une section de guidage (39, 60) d'au moins un des éléments de raccordement (15, 17) traverse au moins par sections le corps de base (23) au niveau d'au moins un emplacement (29, 31).

8. Élément de tension de surface de roulement (1) selon la revendication 7, dans lequel la au moins une section de guidage (39, 60) d'au moins un élément de raccordement (15, 17) est retenue dans le corps de base (23) de manière déplaçable.

9. Élément de tension de surface de roulement (1) selon l'une quelconque des revendications 6 à 8, dans lequel les au moins deux éléments de raccordement (15, 17) présentent des étriers (33, 57) retenus au niveau du corps de base (23), dont l'un peut être déplacé par rapport au corps de base (23) et l'autre est retenu de manière à ne pas pouvoir être déplacé.

10. Élément de tension de surface de roulement (1) selon l'une quelconque des revendications 6 à 9, dans lequel le corps de base (23) présente au moins un alésage (29, 31) s'étendant le long de la direction périphérique (U) et au sein duquel sont accueillis autant la au moins une section de guidage (39, 60) que le au moins un élément à ressort (85).

11. Chaîne de pneumatique (5) pour un pneumatique de véhicule (10), dans laquelle la chaîne de pneumatique (5) présente un filet de roulement (3) qui repose sur la bande de roulement (107) du pneumatique de véhicule (105) à l'état monté (M) et qui s'étend au moins par sections dans la direction circonférentielle (U) du pneumatique de véhicule (105), et dans laquelle la chaîne de pneumatique (5) est munie d'au moins un élément de tension de surface de roulement (1) selon l'une quelconque des revendications 1 à 10 grâce auquel au moins deux extrémités (11, 13) du filet de roulement (3) se faisant face dans la direction circonférentielle (U) sont couplées par l'intermédiaire d'une liaison à élasticité de ressort dans la direction circonférentielle (U) de manière à pouvoir être éloignées l'une de l'autre.

12. Chaîne de pneumatique (5) selon la revendication 11, dans laquelle le au moins un élément de tension de surface de roulement (1) présente au moins trois emplacements de liaison (47) espacés les uns des autres transversalement par rapport à la direction périphérique (U) et destinés à des maillons de chaîne (7) respectivement d'une extrémité (11, 13) du filet de roulement (3), dans laquelle au moins deux des emplacement de liaison (47) sont situés à la même distance ou à une distance différente de l'extrémité opposée (11, 13) du filet de roulement (3).

13. Chaîne de pneumatique (5) selon la revendication 11 ou 12, dans laquelle les deux extrémités (11, 13) du filet de roulement (3) sont reliées l'une à l'autre par l'intermédiaire d'un élément de tension de surface de roulement (1) selon l'une quelconque des revendications 1 à 12.
